# EUROPEAN PATENT APPLICATION

(11) **EP 4 187 678 A1**
(43) Date of publication of application: **31.05.2023**
(21) Application number: 21211256.9
(22) Date of filing: 30.11.2021
(51) Int. Cl.: H01M 10/52, H01M 50/249

(54) **CLIMATE MODULE, BATTERY HOUSING AND HIGH VOLTAGE BATTERY BOX**

(71) Applicant: MANN+HUMMEL GmbH, 71636 Ludwigsburg (DE)
(72) Inventor: Dvo ák, Milan, 59401 Dolní He manice (CZ)
(74) Representative: Mann + Hummel Intellectual Property

(57) **Abstract**

Climate module (1A, 1B) of a battery housing (3), comprising an adsorber unit (25) for adsorbing humidity during an adsorption mode (M1) of the climate module (1A, 1B), a heater unit (22) for regenerating the adsorber unit (25) during a regeneration mode (M2) of the climate module (1A, 1B), an outlet (6) that is fluidly connectable to an inlet (7) of the battery housing (3), an airflow generator (19), and a valve system (V1, V2) for switching the climate module (1A, 1B) from the adsorption mode (M1) into the regeneration mode (M2) and vice versa, wherein the climate module (1A, 1B) takes in ambient air (A) during the adsorption mode (M1), and wherein the airflow generator (19) forces the intaken ambient air (A) through the adsorber unit (25) for dehumidifying the ambient air (A) and guides the dehumidified ambient air (A) via the outlet (6) and the inlet (7) into the battery housing (3) during the adsorption mode (M1). Figure 1

## Description

### Technical field

The present invention relates to a climate module, to a battery housing comprising such a climate module and to a high voltage battery box comprising such a climate module and/or such a battery housing.

### Prior art

High voltage batteries, for example used in electric cars, need to be operated at defined environment conditions. These conditions can comprise a defined humidity, a defined temperature, or the like. To create a defined humidity, a desiccant can be used. The desiccant needs to be exchanged or regenerated from time to time. Regeneration can be done by guiding dry and hot air through the desiccant. The desiccant then releases the humidity to the dry and hot air.

EP 2 533 325 B1 describes a battery pack dehumidifier system for controlling the relative humidity within a battery pack enclosure. The system heats and reactivates desiccant contained within the battery pack at predetermined time intervals or when the humidity within the system reaches a preset level, thereby allowing the desiccant to regain its potential for absorbing/adsorbing water vapor.

### Disclosure of the invention

Against this background, it is one object of the present invention to provide an improved climate module.

Accordingly, a climate module of a battery housing is provided. The climate module comprises an adsorber unit for adsorbing humidity during an adsorption mode of the climate module, a heater unit for regenerating the adsorber unit during a regeneration mode of the climate module, an outlet that is fluidly connectable to an inlet of the battery housing, an airflow generator, and a valve system for switching the climate module from the adsorption mode into the regeneration mode and vice versa, wherein the climate module takes in ambient air during the adsorption mode, and wherein the airflow generator forces the intaken ambient air through the adsorber unit for dehumidifying the ambient air and guides the dehumidified ambient air via the outlet and the inlet into the battery housing during the adsorption mode.

Due to climate module taking in ambient air during the adsorption mode, it is expendable to guide used air from the battery housing through the adsorber unit during adsorption mode.

The battery housing can be part of a high voltage battery box (HV battery box). The HV battery box comprises the battery housing and battery cells that are enclosed in the battery housing. The battery cells are rechargeable. The battery cells can be named rechargeable batteries, storage batteries, or secondary cells. Preferably, the climate module comprises the outlet and an inlet. The outlet of the climate module is connectable to the inlet of the battery housing. Consequently, the inlet of the climate module is connectable to an outlet of the battery housing. "Connectable" in this context can mean that a fluidic connection between the outlet of the climate module and the inlet of the battery housing as well as between the inlet of the climate module and the outlet of the battery housing can be established. The outlet of the climate module and the inlet of the battery housing can be one and the same component of the air climate module. Accordingly, the inlet of the climate module and the outlet of the battery housing can be one and the same component of the air conditioning module.

The climate module is configured or designed to climate or condition the air that is supplied to the battery housing and therefore to the battery cells. In particular, the climate module is designed for humidity management. In other words the climate module according to the invention operates as a humidity ingress protection device of the battery housing.

"Climating" or "conditioning" in this context means that the climate module is configured to supply the battery housing and in particular the battery cells with air that has a defined humidity. "Humidity" is to be understood in the following as the concentration of water vapor present in the air. "Defined" in this context means that the humidity, in particular the relative humidity, is kept within an engineering tolerance. "Engineering tolerance" can be understood as a permissible limit or limits of variation in humidity. The "relative humidity" of an air-water mixture can be defined as the ratio of the partial pressure of water vapor in the mixture to the equilibrium vapor pressure of water over a flat surface of pure water at a given temperature.

The adsorber unit comprises a desiccant, for example silica gel. The desiccant can have the form of exchangeable cartridges, for example granulate cartridges. The desiccant adsorbs water from the intaken ambient air and/or from used air coming from the battery housing. The desiccant releases the water in the regeneration mode. In the adsorption mode, the desiccant is regenerated by means of the intaken ambient air. Additionally or alternatively, the desiccant can be regenerated by means of the used air from the battery housing. Using the used air from the battery housing for regenerating the desiccant can for example be necessary when the humidity of the ambient air is higher than the humidity of the used air. The adsorber unit can comprise one or more than one sensor. For example, the adsorber unit can have a temperature sensor.

The heater unit can comprise a positive temperature coefficient heater (PTC heater). The regeneration of the desiccant is done by guiding air that is heated up through the adsorber unit. The warm air takes humidity from the desiccant. This now moistened air can be discharged into an ambient of the climate module. In the adsorption mode, the heater unit is arranged downstream the adsorber unit. Consequently, in the regeneration mode, the heater unit is arranged upstream the adsorber unit. This can be done by reversing a flow direction of the air that is guided through the climate module. Reversing the flow direction is done by means of the valve system and/or the airflow generator. The valve system is also responsible for intaking the ambient air, discharging used air into the ambient of the climate module and/or guiding the used air from the battery housing through the heater unit during regeneration mode. The heater unit can comprise a sensor, for example a temperature sensor.

The airflow generator can be a fan, in particular an axial fan, or an impeller or any other device that is designed to generate a flow of air through the climate module. The airflow generator is configured to reverse a flow direction of the air. In particular, the flow direction of the air during the adsorption mode is opposite the flow direction during the regeneration mode. The airflow generator "forcing" the air through the adsorber unit means that the airflow generator is configured to generate the airflow and to pump the air through the adsorber unit. A mass air flow meter (MAF) can be arranged upstream or downstream the airflow generator. In particular, the mass air flow meter is arranged between the airflow generator and a valve, in particular a rotary valve or a reverse throttle valve, of the valve system.

The valve system comprises a plurality of valves. For example, the valve system comprises at least two valves. By means of these valves, it is possible to reverse the direction of the airflow and thus to switch the climate module from the adsorption mode into the regeneration mode and vice versa. The regeneration mode can alternatively be named desorption mode. By means of the valve system, humidified air that is produced during regeneration mode can be discharged into the ambient of the climate module.

In embodiments, the valve system automatically switches the climate module from the adsorption mode into the regeneration mode when the adsorber unit reaches a predetermined saturation level, or wherein the valve system automatically switches the climate module from the adsorption mode into the regeneration mode independently of the predetermined saturation level. The predetermined saturation level may be sensed by means of a suitable sensor. There can be provided a sensor that is designed to sense the relative humidity of the dehumidified air that is supplied to the battery housing. Alternatively, the valve system switches the climate module from the adsorption mode into the regeneration mode after a predetermined time interval.

In embodiments, the predetermined saturation level is reached when a desiccant of the adsorber unit is saturated with humidity. As mentioned before, the desiccant can be provided in the form of exchangeable cartridges. The desiccant can be a silicone gel granulate. The desiccant and thus the adsorber unit is placed outside the battery housing.

In embodiments, the valve system reverses a direction of airflow throughout the adsorber unit when switching the climate module from the adsorption mode into the regeneration mode. As mentioned before, this reversing of the direction of airflow can be performed by means of the valve system and/or the airflow generator.

In embodiments, a work direction of the airflow generator is reversed when the climate module is switched from the adsorption mode into the regeneration mode. "Work direction" in this context means the direction of the airflow generated by the airflow generator. This can be done by reversing the polarity of a drive element, for example an electric motor, of the airflow generator.

In embodiments, a pressure compensation is performable via the outlet when a negative pressure is present in the battery housing, or wherein a pressure compensation is performable via an inlet of the climate module when a positive pressure is present in the battery housing. Thus, the climate module is designed to run a pressure compensation when there is a relative positive pressure or a relative negative pressure in the battery housing. The inlet of the climate module is used to compensate the positive pressure by taking in air from the battery housing. Consequently, the outlet of the climate module can be used to compensate the negative pressure in the battery housing by supplying the battery housing with air. There can be provided a pressure sensor that is designed to sense a pressure difference between the inlet and the outlet of the battery housing. "Negative pressure" in this context is to be understood as a pressure that is lower than ambient pressure. "Positive pressure" in this context is to be understood as a pressure that is higher than ambient pressure. The pressure compensation prevents pressure-induced damages of the battery housing. Pressure compensation can be necessary when the climate module is operated during overcoming height differences. Height differences can occur when a vehicle comprising the climate module or the HV battery box is operated in the mountains. Also, air transportation can require pressure compensation.

In embodiments, the climate module takes in used air from the battery housing that passes the adsorber unit and enters the battery housing via the outlet and the inlet together with the intaken ambient air during the adsorption mode. Alternatively, only the used air can be taken to the adsorber unit. This can be necessary when the humidity of the ambient air is higher than the humidity of the used air from the battery housing. Adsorbing humidity from the used air can for example be necessary in areas with high air humidity, for example in the tropics. One arbitrary example for the tropics is Singapore.

In embodiments, the climate module takes in either ambient air or used air from the battery housing during the regeneration mode, wherein the climate module is configured to recognize if the ambient air is dry enough for regenerating the adsorber unit or not, and wherein when the ambient air is not dry enough, only the used air from the battery housing is used for regenerating the adsorber unit. Also, a mixture of ambient air and used air from the battery housing can be used for regeneration of the adsorber unit. Recognizing if the ambient air is dry enough for regenerating the adsorber unit or not can be done by means of a sensor, in particular a humidity sensor. There can be provided a sensor for sensing the humidity of the used air from the battery housing and a sensor for sensing the humidity of the ambient air.

In embodiments, the climate module further comprises an interface for discharging humidity into an ambient of the climate module and for taking in ambient air from the ambient. There can be provided more than one interface. For example, there is one interface for intaking ambient air and one interface for discharging the humidity into the ambient. There can also be one common interface. The humidity is discharged by means of discharging air that is saturated with water desorbed from the adsorber unit during the regeneration mode. In the simplest case, the interface can be an opening that is provided in a housing of the climate module. However, the interface can also have a more complex design, for example comprising a housing, different fluid paths, different openings, sensors, or the like.

In embodiments, the interface comprises a separation element that fully covers a fluidic cross section of the interface. As mentioned before, the interface can be an opening that is provided in the housing of the climate module. In this case, the fluidic cross section of the interface is the same as a cross-sectional area of the opening. The separation element can be a membrane. In particular, the separation element can be a semi-permeable membrane. "Semipermeable membrane" in this context can be understood as a type of membrane that allows only certain molecules or ions to pass through it. The rate of passage depends on the pressure, concentration, and temperature of the molecules or solutes on either side, as well as the permeability of the membrane to each solute. For example, the membrane can be made of Polytetrafluoroethylene (PTFE). In this case, the membrane can be named PTFE membrane. Other materials are also suitable. The separation element can have a thickness of less than 1 mm, preferably of less than 0.5 mm. The separation element can be protected by means of a protecting cover that can be snapped to the housing of the climate module or a housing of the interface. The protecting cover protects the separation element against damages, for example against a high-pressure water jet. The separation element can comprise a frame that carries the separation element. The frame can be connected to the interface.

In embodiments, the valve system comprises a first valve and a second valve, wherein each valve comprises an adsorption position and a regeneration position. In the adsorption mode, both valves are in the adsorption position. In the adsorption mode, ambient air and/or used air from the battery box passes the second valve and is then guided through the adsorber unit, the heater unit, and the airflow generator to the first valve. The first valve guides then the dehumidified air to the battery housing. Consequently, in the regeneration mode, ambient air and/or used air from the battery box passes the first valve and is then guided through the airflow generator, the heater unit, and the adsorber unit to the second valve. The second valve discharges the humidified air into the ambient via the interface. Ambient air is preferable intaken by means of the interface.

In embodiments, each valve comprises a valve body and an actuator for rotating the valve body into the adsorption position or the regeneration position. The actuator can comprise an electric motor. The actuator can also comprise a piezo element. The actuator is mechanically coupled to the valve body. The actuator can have two positions. Thus, the actuator is configured to move the valve body into two positions, namely the afore mentioned adsorption position and the regeneration position.

In embodiments, at least one of the valves comprises a block and release mechanism, in particular a check valve. A check valve, non-return valve, reflux valve, retention valve, foot valve, or one-way valve is a valve that normally allows fluid to flow through it in only one direction. A check valve can comprise a valve body, for example in the form of a ball, and a spring element that biases the valve body. Fluid pressure can open the check valve in one direction when the pressure is high enough. The pressure for opening the check valve can be adjusted by means of the design of the spring element.

In embodiments, the climate module further comprises a pressure relieve valve that is configured to release a pressure inside the battery module when a predetermined pressure is reached. The pressure relieve valve is used to determine the pressure conditions inside the battery housing, so that, for example, pressure compensation can be triggered at a certain positive pressure and/or a specific internal pressure can be set.

In embodiments, the pressure relieve valve opens and closes based on sensor signals from a pressure sensor. The pressure sensor is preferably part of the climate module. For example, the pressure sensor is configured to sense a pressure difference between the inlet and the outlet of the climate module.

Furthermore, a battery housing of a high voltage battery box is provided. The high voltage battery box comprises a climate module as mentioned before and an inlet that is removably attached to the outlet of the climate module. For example, the climate module is bolted to the battery housing. As mentioned before, the climate module comprises a housing. This housing can be removably attached to the battery housing. Preferably, the climate module is arranged outside the battery housing.

In embodiments, the battery housing further comprises an emergency degassing unit for degassing the battery housing in case of a thermal runaway of the high voltage battery box. This prevents the battery housing from damages due to a positive pressure inside the battery housing generated by the thermal runaway. "Thermal runaway" in this context describes a process that is accelerated by increased temperature, in turn releasing energy that further increases temperature. Thermal runaway occurs in situations where an increase in temperature changes the conditions in a way that causes a further increase in temperature, often leading to a destructive result. The emergency degassing unit is a separate device and can be functionally independent from the climate module. In particular the emergency degassing unit can be attached to a different housing interface and be located at a different position of the housing. The basic idea of this is to separate the "breathing" function under normal operating conditions from the emergency degassing function under emergency (thermal runaway) conditions. This gives the opportunity to tailor both the climate module and the emergency degassing unit to their core functions.

In embodiments, the climate module is configured to detect a significant pressure increase and/or dangerous gases for an early recognizing of a threatening thermal runaway. This detection can be performed by means of a sensor. The sensor can be a combined sensor that is engineered to detect hydrogen, carbon dioxide, temperature, pressure, or the like. This sensor can be arranged between the inlet of the climate module and the first valve of the valve system. In particular, the climate module is designed to detect dangerous gases like hydrogen or carbon dioxide and/or a significant pressure increase inside the battery housing early before thermal runaway.

In embodiments, the climate module is configured to emit a warning signal when a thermal runaway is detected. The warning signal can be visual and/or audible. A signal unit can be provided for generating the warning signal. Thus, the climate module is designed to warn all passengers of a vehicle within five minutes to evacuate the vehicle before a malfunction of the high voltage battery box according to standard GB38031-2020 (electric vehicles traction battery safety requirement) occurs.

In addition, a high voltage battery box is provided. The high voltage battery box comprises a climate module as explained before and/or a battery housing as explained before. As mentioned above, the high voltage battery box comprises battery cells that are enclosed in the battery housing.

### Short description of the drawings

The figures show:
Fig. 1 a schematic view of one embodiment of a climate module;
Fig. 2 another schematic view of the climate module according to Fig. 1;
Fig. 3 another schematic view of the climate module according to Fig. 1;
Fig. 4 a schematic view of another embodiment of a climate module;

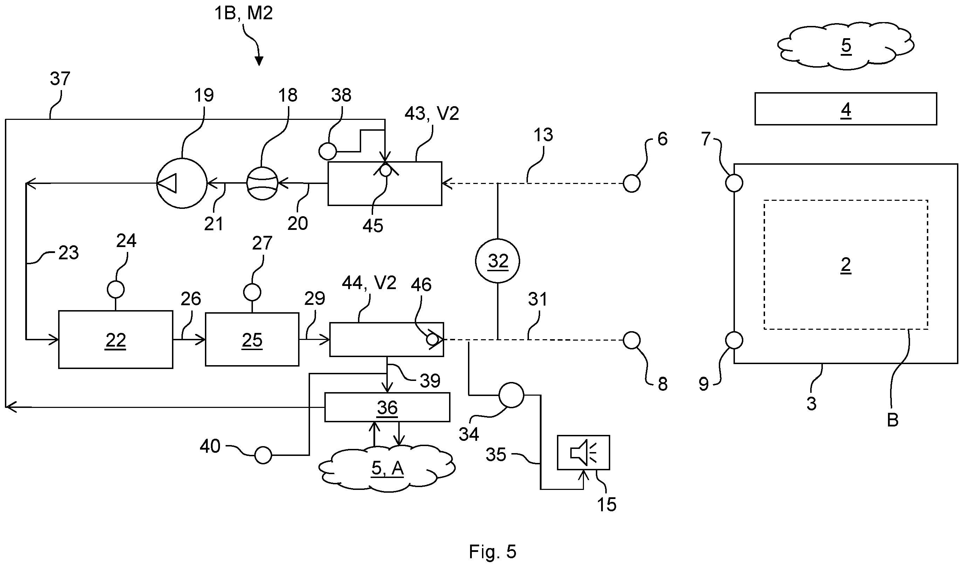

Fig. 5 another schematic view of the climate module according to Fig. 4; and

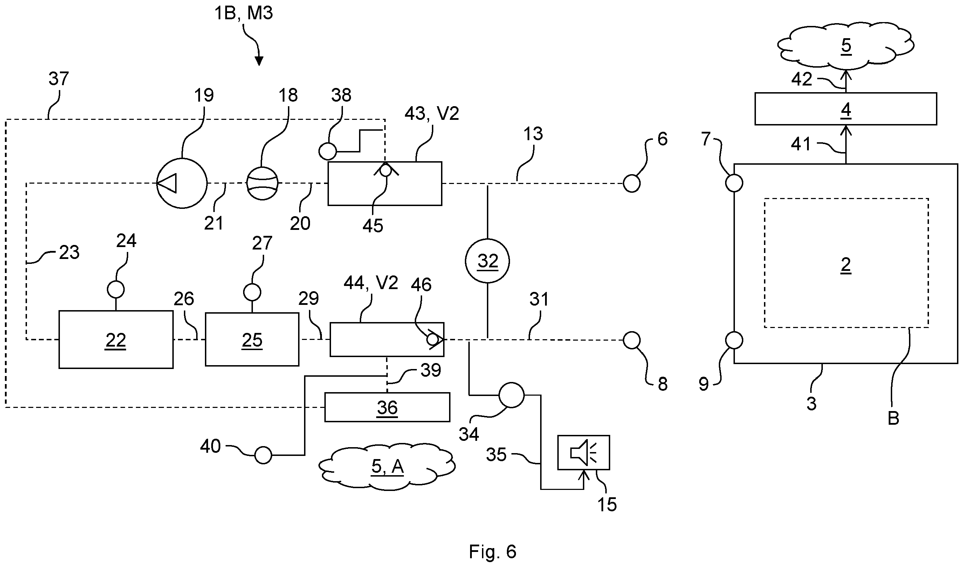

Fig. 6 another schematic view of the climate module according to Fig. 4.

In the figures, identical or functionally identical elements have been given the same reference signs unless otherwise indicated.

### Embodiment(s) of the invention

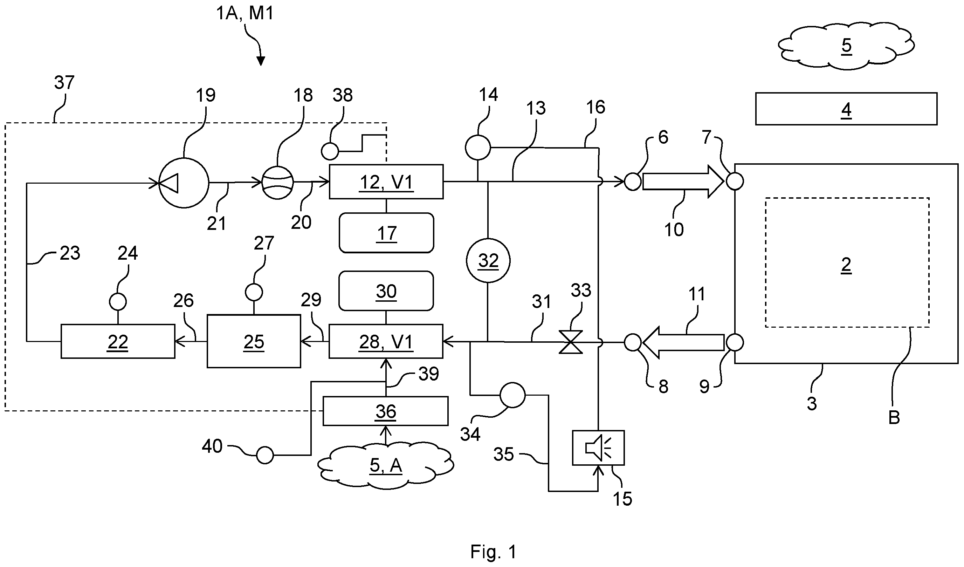

Fig. 1 shows one embodiment of a climate module 1A. The climate module 1A is designed to supply a high voltage battery box 2 (HV battery box) with fresh dry air. The HV battery box 2 has a battery housing 3. The battery housing 3 encloses a plurality of battery cells B. The HV battery box 2 has an emergency degassing unit 4. Air or gas from the the HV battery box 2 can be supplied to the emergency degassing unit 4. In case of a thermal runaway, air or gas from the HV battery box 2 can be supplied to an ambient 5 of the climate module 1A via the emergency degassing unit 4.

Now turning back to the climate module 1A, the climate module 1A can be part of a vehicle. The vehicle can be an electric vehicle or hybrid electric vehicle. The vehicle is a car or automobile. However, the vehicle can also be an aircraft, a ship or a commercial vehicle. The vehicle has an electric motor that is powered by means of the HV battery box 2.

The climate module 1A comprises an outlet 6 that is connected to an inlet 7 of the HV battery box 2. The climate module 1A comprises an inlet 8 that is connected to an outlet 9 of the HV battery box 2. The outlet 6 supplies dry clean air 10 to the HV battery box 2 via the inlet 7. "Connected" in this context means that there is created at least a fluid connection between the outlet 6 and the inlet 7 as well as the inlet 8 and the outlet 9. The inlet 8 takes in used air 11 from the HV battery box 2 via the outlet 9. The outlet 6 and the inlet 7 do not necessarily have to be two separate components, but can be formed by a common component. Consequently, the inlet 8 and the outlet 9 do likewise not necessarily have to be two separate components, but can be formed by a common component.

The outlet 6 is connected to a first rotary valve 12 by means of a conduit 13. The first rotary valve 12 has an overmolded silicone gasket. The conduit 13 has a sensor 14. The sensor 14 is a multisensor or combined sensor. The sensor 14 is designed to detect hydrogen, carbon dioxide, the temperature and/or the pressure. The sensor 14 is connected to an alarm unit 15 via a line 16. In particular, the sensor 14 can detect dangerous gases, the temperature and/or the pressure inside the battery housing 3 of the HV battery box 2. The sensor 14 ensures warning of passengers to evacuate an vehicle comprising the HV battery box 2 during a thermal runaway event. The sensor 14 can be attached to the HV battery box 2.

The first rotary valve 12 has an actuator 17. The actuator 17 is designed to rotate or to move a valve body of the first rotary valve 12. The actuator 17 is designed to move the valve body into two different positions. The actuator 17 comprises an electric motor for steering the two positions of the first rotary valve 12. The motor can be a direct current (DC) motor.

A sensor 18 is arranged between the first rotary valve 12 and an airflow generator 19. The airflow generator 19 is designed to create an airflow. The airflow generator 19 can be an impeller or fan or can be named impeller or fan. The airflow generator 19 can be an axial fan. The sensor 18 is designed to detect the volume flow of a gas, namely air, that is conveyed by the airflow generator 19. The sensor 18 can be a mass air flow (MAF) sensor. The airflow generator 19 is a two way airflow generator. That means that the direction of the flow of the gas that is conveyed by the airflow generator 19 can be turned around. The first rotary valve 12 is connected to the sensor 18 by means of a conduit 20. The sensor 18 is connected to the airflow generator 19 by means of a conduit 21.

The airflow generator 19 is connected to a heater unit 22 by means of a conduit 23. The heating untit 22 can comprise a positive temperature coefficient (PTC) heater. The heater unit 22 has a temperature sensor 24. The temperature sensor 24 can detect a temperature inside the heater unit 22.

An adsorber unit 25 is connected to the heater unit 22 via a conduit 26. The adsorber unit 25 can comprise exchangeable silicone granulate cartridges The adsorber unit 25 comprises a temperature sensor 27. The temperature sensor 27 can detect a temperature of the adsorber unit 25. The heater unit 22 can be used for regenerating the adsorber unit 25.

The adsorber unit 25 is connected to a second rotary valve 28 by means of a conduit 29. The second rotary valve 28 has an actuator 30. The actuator 30 is designed to rotate or to move a valve body of the second rotary valve 28. The actuator 30 is designed to move the valve body into two different positions. The second rotary valve 28 has an overmolded silicone gasket. The second rotary valve 28 is connected to the inlet 8 via an conduit 31. The first rotary valve 12 and the second rotary valve 28 can be designed identically. The rotary valves 12, 28 together form a valve system V1 of the climate module 1A.

A sensor 32 is provided that is designed to sense a pressure difference between the conduit 13 and the conduit 31. The sensor 32 is a pressure sensor. Thus, a pressure difference between the outlet 6 and the inlet 8 of the climate module 1A can be monitored. The conduit 31 has a pressure relieve valve 33. The pressure relieve valve 33 is designed for pressure safety compensation during operation of the HV battery box 2 and the climate module 1A. The conduit 31 has a sensor 34. The sensor 34 is a multisensor or combined sensor. The sensor 34 is designed to detect hydrogen, carbon dioxide, the temperature and/or the pressure. The sensor 34 is connected to the alarm unit 15 via a line 35.

The climate module 1A further has an interface 36. By means of the interface 36, the climate module 1A can take in ambient air A from the ambient 5 or discharge air into the anmbient 5. There can be provided exactly one interface 36. However, there can be provided more than one interface 36. The interface 36 comprises a seperation element. The seperation element is a membrane. The seperation element is semipermeable. The seperation element can comprise Polytetrafluoroethylene (PTFE). The interface 36 is connected to the first rotary valve 12 via a conduit 37. The conduit 37 has a sensor 38. The sensor 38 is a multisensor or combined sensor. The sensor 38 is designed to detect the relative humidity, the temperature and/or the pressure.

The interface 36 is connected to the second rotary valve 28 via a conduit 39. The conduit 39 has a sensor 40. The sensor 40 is a multisensor or combined sensor. The sensor 40 is designed to detect the relative humidity, the temperature and/or the pressure. The sensors 38, 40 can be designed identically.

The functionality of the climate module 1A will be explained in the follwing with reference to Figs. 1 to 3. In Figs. 1 to 3 active fluid paths are indicated by means of continious lines, wheras inactive fluid paths are indicated by means of dashed lines. "Active" in this context means that air is guided through the fluid paths that are indicated by means of continious lines. "Inactive" means that no air is guided through the fluid paths that are indicated by means of dashed lines. "Fluid path" in this context can mean one ore more than one of the conduits 13, 20, 21, 23, 26, 29, 31, 37, 39.

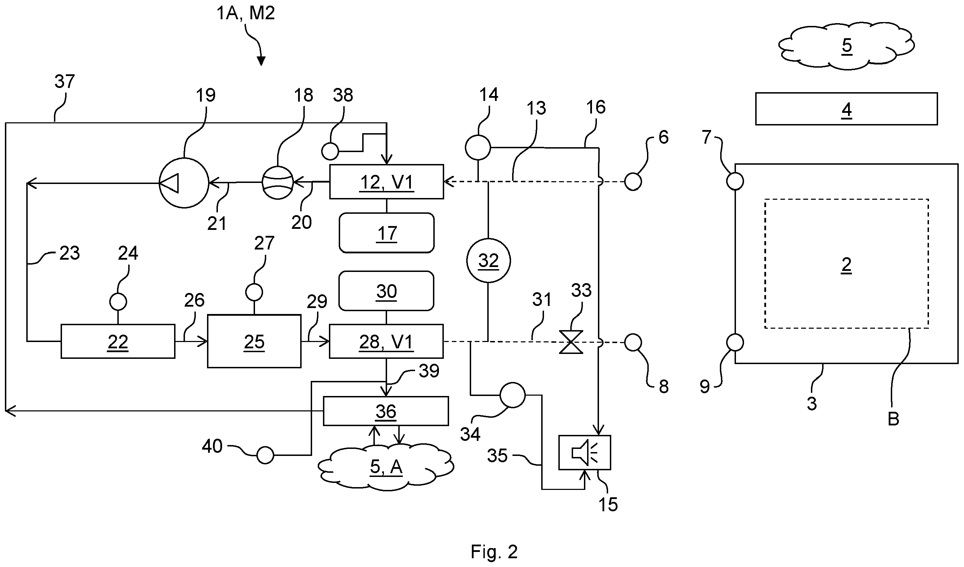

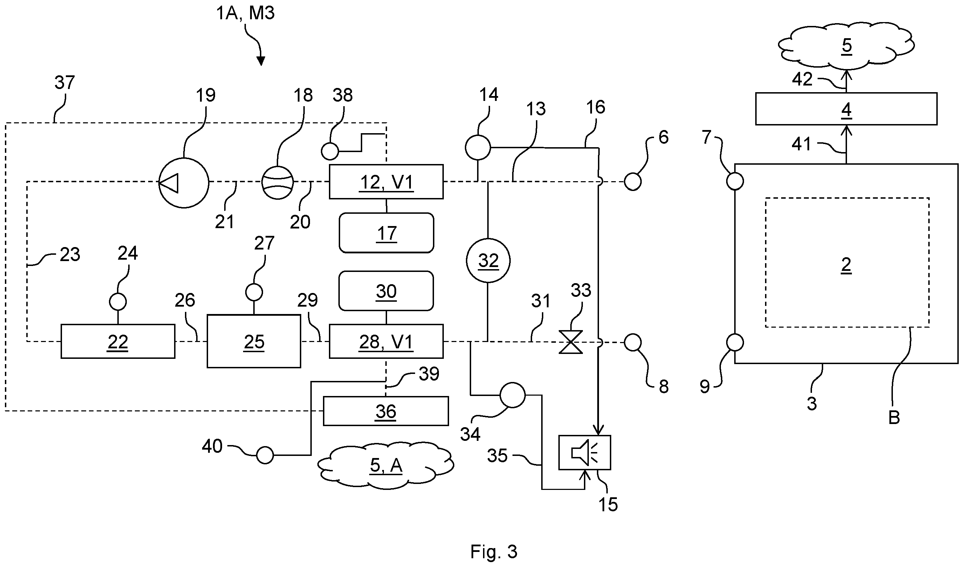

Fig. 1 shows the climate module 1A in a standard mode or adsorption mode M1, Fig. 2 shows the climate module 1A in a charging mode or regeneration mode M2, and Fig. 3 shows the climate module 1A in an degassing mode or emergency mode M3 that can be used in the case of a thermal runaway. In the follwing, Figs. 1 to 3 will be referred to at the same time.

In the adsorption mode M1 as shown in Fig. 1, the climate module 1A ensures a permanent pressure compensation between the HV battery box 2 and the ambient 5 during standard vehicle operation because of uphill and downhill driving and/or airplane transportation. The climate module 1A also ensures that a humidity ingress by an adsorption process of the adsorber unit 25 during pressure compensation is reduced. The climate module 1A furthermore ensures protection against water ingress by the separation element of the interface 36. The separation element is strongly protected against a high pressure water jet by means of the protecting cover.

During the adsorption mode M1, the HV battery box 2 works under normal working conditions and breathes dry clean air 10 that is provided to the inlet 7 of the HV battery box 2 via the outlet 6. The air that is guided through the climate module 1A is indicated by means of arrows in Fig. 1. The climate module 1A can take in used air 11 from the outlet 9 of the HV battery box 2. The second rotary valve 28 lets in the used air 11 and at the same time ambient air A from the ambient 5. Taking in the used air 11 is optional. Both rotary valves 12, 28 are in the regeneration position. The used air 11 can also be discharged into the anbient 5 via the interface 36.

The ambient air A from the ambient 5 passes the interface 36 and is then guided to the second rotary valve 28. The interface 36 is not permeable for specific substances, like water. From the second rotary valve 28, the ambient air A is guided through the adsorber unit 25. The adsorber unit 25 seperates humidity from the ambient air A. The adsorber unit 25 can have exchangeable silicone granulate cartridges. The adsorber unit 25 is under surveillance of the temperature sensor 27.

Downstream the adsorber unit 25, the ambient air A passes the heater unit 22 that is switched off in the adsorption mode M1. The airflow generator 19 sends the ambient air A via the sensor 18, the first rotary valve 12 and the outlet 6 as dry clean air 10 to the HV battery box 2. In the adsorption mode M1, the sensor 32 can capture a pressure difference between the outlet 6 and the inlet 8. The sensors 14, 34 can give alarm via the alarm unit 15 in case that the dry clean air 10 and/or the used air 11 do not comply with the requirements.

The adsorption mode M1 can be performed in an open circuit. In this case, ambient air A is taken in. This intaken ambient air A is then dried by means of the adsorber unit 25 and delivered to the HV battery box 2. The airflow generator 19 is working clockwise. Alternatively, the adsorption mode M1 can be performed in a closed circuit. This can be done in the case of a pressure equilibrium. In this case, the used air 11 from the HV battery box 2 is guided through the adsorber unit 25. The airflow generator 19 is also working clockwise.

In the regeneration mode M2 (Fig. 2), the climate module 1A ensures regeneration of the adsorber unit 25 by heated up ambient air A from the ambient 5. The heated up ambient air A ist used for drying silicone granulate cartridges of the adsorber unit 25 during a charging operation. The climate module 1A is configured to recognize if the ambient air A for the regeneration process has a right humidity to cover a proper drying of the desiccant of the adsorber unit 25. In case of a high humidity of the ambient air A, the climate module 1A will use the already dried used air 11 from the HV battery box 2 for regeneration purposes.

The first rotary valve 12 lets in ambient air A from the ambient 5 via the interface 36 and the conduit 37 as indicated by means of an arrow in Fig. 2. At the same time, used air 11 from the HV battery box 2 can be discharged into the first rotary valve 12 and supplied to the heater unit 22 to generate hot air for regenerating the adsorber unit 25. However, using the used air 11 for regeneration this is optional. After passing the sensor 18, the airflow generator 19 forces the ambient air A through the heater unit 22 that is now switched on. The heater unit 22 heats up the ambient air A coming from the airflow generator 19. Consequently, compared to the adsorption mode M1, a work direction of the airflow generator 19 is reversed in the regeneration mode M2.

The ambient air A coming from the heater unit 22 heats up the adsorber unit 25, in particular the desiccant of the adsorber unit 25. Thus, water is released from the absorber unit 25 and taken away from the adsorber unit 25 by the warm ambient air A coming from the heater unit 22. Success of regeneration can be controlled via the temperature sensor 27. The second rotary valve 28 discarges the moist ambient air A from the absorber unit 25 back into the ambient 5 as indicated by means of an arrow in Fig. 2. This can be done via the interface 36. When the regeneration was successful, the climate module 1A can be switched from the regeneration mode M2 back into the adsorption mode M1 by means of the valve system V1 and the airflow generator 19.

In the emergency mode M3 (Fig. 3), the climate module 1A works together with the emergency degassing unit 4. The emergency degassing unit 4 comprises an air-tight membrane. The emergency degassing unit 4 covers an emergency degassing in case of thermal runaway event of the HV battery box 2. The climate module 1A is configured to detect dangerous gases, like for example hydrogen or carbon dioxide, and/or a significant pressure increase early before a thermal runaway occurs. By means of the alarm unit 15, the climate module 1A can warn passengers within five minutes to evacuate the vehicle before a malfunction of the HV battery box 2 occurs. This fulfills the standard GB38031-2020 for electric vehicles traction battery safety requirements.

During the emergency mode M3, the outlets 6, 9 and the inlets 7, 8 can be fluidly decoupled. This is done by means of the valve system V1. However, this decoupling is optional. Air from the HV battery box 2 is supplied to the emergency degassing unit 4 as indicated by an arrow 41 in Fig. 3. The emergency degassing unit 4 sets the air free to the ambient 5 as indicated by an arrow 42.

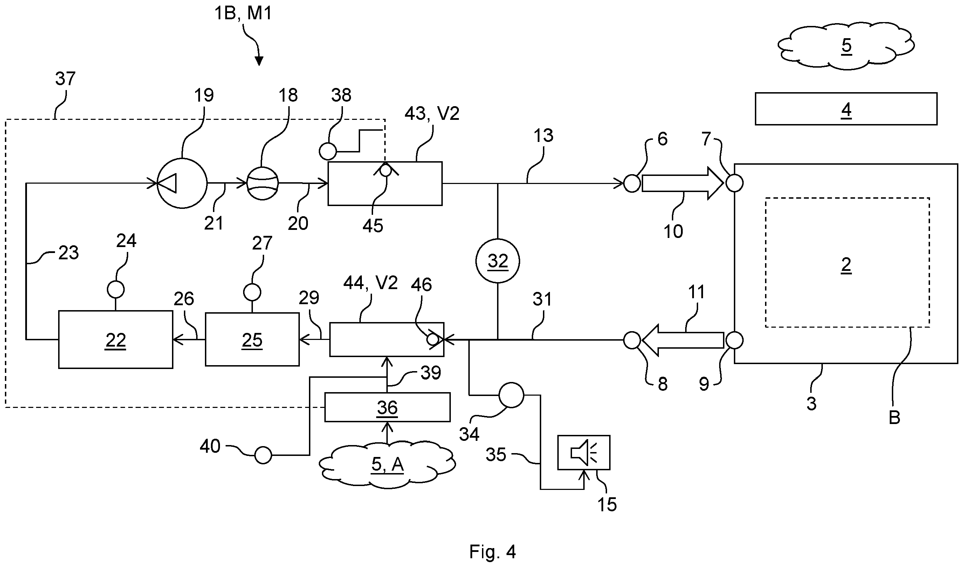

Fig. 4 shows another embodiment of a climate module 1B. The design of the two embodiments of the climate module 1A, 1B is essentially the same. Therefore, in the following only the differences between the climate module 1B and the climate module 1A will be explained.

The climate module 1B differs from the climate module 1A in that the climate module 1B has no rotary valves 12, 28. Instead of the rotary valves 12, 28, the climate module 1B has a first reverse throttle valve 43 and a second reverse throttle valve 44. Each reverse throttle valve 43, 44 comprises a block and release mechanism 45, 46. Each block and release mechanism 45, 46 can comprise or can be a check valve. The reverse throttle valves 43, 44 together form a valve system V2 of the climate module 1B. The functionality of the climate module 1B is essentially the same as the functionality of the climate module 1A.

The valve system V2 and optionally the airflow generator 19 ensure that the climate module 1B can be switched from the adsorption mode M1 into the regeneration mode M2 and vice versa. Each reverse throttle valve 43, 44 can be switched into two positions, namely into an adsorption position and a regeneration position. Each reverse throttle valve 43, 44 can comprise an actuator (not shown) for actuating the reverse throttle valve 43, 44.

During the adsorption mode M1, the airflow generator 19 works clockwise. Thus, an airflow is going primarily from the ambient 5 to the battery housing 3 of the HV battery box 2. When a positive pressure exists inside the HV battery box 2, the second reverse throttle valve 44 is opened and pressure is balanced. Thus, a circuit created by the climate module 1B becomes closed.

During the regeneration mode M2, the airflow generator 19 works counter-clockwise. Thus, an airflow is going primarily from HV battery box 2 to the ambient 5. When a negative pressure exists inside HV battery box 2, the first reverse throttle valve 43 is opened and pressure is balanced. Thus, the circuit becomes opened.

In summary, the climate module 1A, 1B is an external device that can be attached to the battery housing 3 of the HV battery box 2. The climate module 1A, 1B has sensor integration. The climate module 1A, 1B can be used with vehicles that comprise a HV battery box 2 as explained before. The main function of the climate module 1A, 1B is to reduce air humidity ingress which goes into the HV battery box 2 during permanent pressure compensation from the ambient 5, for example during uphill and downhill driving and/or airplane transport. It means that the dangerous humidity cannot get into HV battery box 2. The battery cells B are thus protected from humidity.

Reducing the humidity of the intaken ambient air A is covered by the adsorption process during standard vehicle operation, namely during the absoption mode M1. The adsorber unit 25 is regenerated by heated up fresh ambient air A from the ambient 5 or used air 11 from the HV battery box 2 during charging vehicle operation. The used air 11 is supplied to the adsorber unit 25 in case of a high ambient humidity. Furthermore, the climate module 1A, 1B ensures protection against water ingress by means of a semipermeable membrane which is strongly protected against a high pressure water jet by the protecting cover as mentioned before.

The external climate module 1A, 1B can comprise a housing with an interface for connecting the climate module 1A, 1B to the HV battery box 2. The housing can be made of plastic. The housing can be an injection molded part. The housing of the climate module 1A, 1B is preferably closed by two covers with interfaces for the actuators 17, 30 which drive the valve system V1, V2. The actuators 17, 30 are driven by multisensors. The valve system V1, V2 and/or the airflow generator changes airflow direction depending on the operation mode M1, M2.

The climate module 1A, 1B includes the airflow generator 19 that is working in two directions. The airflow generator 19 is located in the housing of the climate module 1A, 1B and is driven by multisensors as well. The housing of the climate module 1A, 1B has an adsorption chamber where the adsorber unit 25 and the heater unit 22 are located. The adsorber cartridge of the adsorber unit 25 ensures drying of the humid air that flows into the HV battery box 2 and has an own lifetime. Thus, the adsorber unit 25 is a serviceable component. The housing of the climate module 1A, 1B can also be used as a motherboard for all multisensors for humidity, pressure and temperature detection. All sensors 14, 18, 24, 27, 32, 34, 38, 40, actuators 17, 30, the airflow generator 19 and the heater unit 22 are working together according to a functional mechatronic scheme.

When a thermal runaway event comes up, the climate module 1A, 1B will detect dangerous gases, like for example hydrogen and carbon dioxide, by the sensors 14, 34 and will warn passengers in the vehicle via the alarm unit 15. In case of a thermal runaway event, the climate module 1A, 1B is working with the emergency degassing unit 4 with an air-tight membrane. When the pressure is increased by a malfunction of the HV battery box 2, this membrane will tear through a plastic pin and the dangerous gasses are released into the ambient 5 within a short time slot.

An advantage of the climate module 1A, 1B is the active adsorber unit 25 that does not pass the humid air into the HV battery box 2. "Active" in this context means that the adsorber unit 25 can be regenerated and an exchange of the desiccant is expendable. The whole system of the climate module 1A, 1B is watertight by using the separation element in form of a semipermeable membrane on inlet and outlet interfaces 36. Since the adsorber unit 25 can be regenerated, it is not needed to change drying cartridges of the adsorber unit 25 so often, because the desiccant is regenerated in given loops, namely in a charging mode of the HV battery box 2. However, after some time, the adsorber cartridge can be changed.

An additional advantage is the smart function of the external climate module 1A, 1B which is completely driven by multisensors. The climate module 1A, 1B works together with the emergency degassing unit 4 if a thermal runaway event occurs. The climate module 1A, 1B will thus not be hit by dangerous gases. The lifetime of the HV battery box 2 can be extended by means of the climate module 1A, 1B.

### Reference signs:

- 1A: Climate module
- 1B: Climate module
- 2: HV battery box
- 3: Battery housing
- 4: Emergency degassing unit
- 5: Ambient
- 6: Outlet
- 7: Inlet
- 8: Inlet
- 9: Outlet
- 10: Clean air
- 11: Used air
- 12: Rotary valve
- 13: Conduit
- 14: Sensor
- 15: Alarm unit
- 16: Line
- 17: Actuator
- 18: Sensor
- 19: Airflow generator
- 20: Conduit
- 21: Conduit
- 22: Heater unit
- 23: Conduit
- 24: Sensor
- 25: Adsorber unit
- 26: Conduit
- 27: Sensor
- 28: Rotary valve
- 29: Conduit
- 30: Actuator
- 31: Conduit
- 32: Sensor
- 33: Pressure relieve valve
- 34: Sensor
- 35: Line
- 36: Interface
- 37: Conduit
- 38: Sensor
- 39: Conduit
- 40: Sensor
- 41: Arrow
- 42: Arrow
- 43: Reverse throttle valve
- 44: Reverse throttle valve
- 45: Block and release mechanism
- 46: Block and release mechanism

- A: Ambient air
- B: Battery cell
- M1: Mode
- M2: Mode
- M3: Mode
- V1: Valve system
- V2: Valve system

## Claims

1. Climate module (1A, 1B) of a battery housing (3), comprising an adsorber unit (25) for adsorbing humidity during an adsorption mode (M1) of the climate module (1A, 1B), a heater unit (22) for regenerating the adsorber unit (25) during a regeneration mode (M2) of the climate module (1A, 1B), an outlet (6) that is fluidly connectable to an inlet (7) of the battery housing (3), an airflow generator (19), and a valve system (V1, V2) for switching the climate module (1A, 1B) from the adsorption mode (M1) into the regeneration mode (M2) and vice versa, wherein the climate module (1A, 1B) takes in ambient air (A) during the adsorption mode (M1), and wherein the airflow generator (19) forces the intaken ambient air (A) through the adsorber unit (25) for dehumidifying the ambient air (A) and guides the dehumidified ambient air (A) via the outlet (6) and the inlet (7) into the battery housing (3) during the adsorption mode (M1).

2. Climate module according to claim 1, wherein the valve system (V1, V2) automatically switches the climate module (1A, 1B) from the adsorption mode (M1) into the regeneration mode (M2) when the adsorber unit (25) reaches a predetermined saturation level, or wherein the valve system (V1, V2) automatically switches the climate module (1A, 1B) from the adsorption mode (M1) into the regeneration mode (M2) independently of the predetermined saturation level.

3. Climate module according to claim 2, wherein the predetermined saturation level is reached when a desiccant of the adsorber unit (25) is saturated with humidity.

4. Climate module according to one of claims 1 - 3, wherein the valve system (V1, V2) reverses a direction of airflow throughout the adsorber unit (25) when switching the climate module (1A, 1B) from the adsorption mode (M1) into the regeneration mode (M2).

5. Climate module according to claim 4, wherein a work direction of the airflow generator (19) is reversed when the climate module (1A, 1B) is switched from the adsorption mode (M1) into the regeneration mode (M2).

6. Climate module according to one of claims 1 - 5, wherein a pressure compensation is performable via the outlet (6) when a negative pressure is present in the battery housing (3), or wherein a pressure compensation is performable via an inlet (8) of the climate module (1A, 1B) when a positive pressure is present in the battery housing (3).

7. Climate module according to one of claims 1 - 6, wherein the climate module (1A, 1B) takes in used air (11) from the battery housing (3) that passes the adsorber unit (25) and enters the battery housing (3) via the outlet (6) and the inlet (7) together with the intaken ambient air (A) during the adsorption mode (M1).

8. Climate module according to one of claims 1 - 7, wherein the climate module (1A, 1B) takes in either ambient air (A) or used air (11) from the battery housing (3) during the regeneration mode (M2), wherein the climate module (1A, 1B) is configured to recognize if the ambient air (A) is dry enough for regenerating the adsorber unit (25) or not, and wherein when the ambient air (A) is not dry enough, only the used air (11) from the battery housing (3) is used for regenerating the adsorber unit (25).

9. Climate module according to one of claims 1 - 8, further comprising an interface (36) for discharging humidity into an ambient (5) of the climate module (1A, 1B) and for taking in ambient air (A) from the ambient (5).

10. Climate module according to claim 9, wherein the interface (36) comprises a separation element that fully covers a fluidic cross section of the interface (36).

11. Climate module according to one of claims 1 - 10, wherein the valve system (V1, V2) comprises a first valve (12, 43) and a second valve (28, 44), and wherein each valve (12, 43, 28, 44) comprises an adsorption position and a regeneration position.

12. Climate module according to claim 11, wherein each valve (12, 28) comprises a valve body and an actuator (17, 30) for rotating the valve body into the adsorption position or the regeneration position.

13. Climate module according to claim 11, wherein at least one of the valves (43, 44) comprises a block and release mechanism (45, 46), in particular a check valve.

14. Climate module according to one of claims 1 - 13, further comprising a pressure relieve valve (33) that is configured to release a pressure inside the battery module (1A, 1B) when a predetermined pressure is reached, in particular wherein the pressure relieve valve (33) opens and closes based on sensor signals from a pressure sensor (32).

15. Battery housing (3) of a high voltage battery box (2) comprising a climate module (1A, 1B) according to one of claims 1 - 14 and an inlet (7) that is removably attached to the outlet (6) of the climate module (1A, 1B).

16. Battery housing according to claim 15, further comprising an emergency degassing unit (4) for degassing the battery housing (3) in case of a thermal runaway of the high voltage battery box (2).

17. Battery housing according to claim 16, wherein the climate module (1A, 1B) is configured to detect a significant pressure increase and/or dangerous gases for an early recognizing of a threatening thermal runaway, in particular wherein the climate module (1A, 1B) is configured to emit a warning signal when a thermal runaway is detected.

18. High voltage battery box (2) comprising a climate module (1A, 1B) according to one of claims 1 - 14 and/or a battery housing (3) according to one of claims 15 - 17.
